# EUROPEAN PATENT APPLICATION

(11) **EP 4 410 600 A1**
(43) Date of publication of application: **07.08.2024**
(21) Application number: 23155143.3
(22) Date of filing: 06.02.2023
(51) Int. Cl.: B60R 5/04, B60R 11/00, B60R 13/01

(54) **A FASTENING SYSTEM FOR EQUIPMENT IN A CARGO SPACE OF A VEHICLE AND METHOD FOR FASTENING THE EQUIPMENT**

(71) Applicant: Modul-System HH AB, 431 22 Mölndal (SE)
(72) Inventor: Carlsson, Anders, SE-422 50 HISINGS BACKA (SE); Arvidsson, Fredrik, 41661 Göteborg (SE)
(74) Representative: AWA Sweden AB

(57) **Abstract**

The present invention relates to a fastening system (20) for equipment (2) in a cargo space of a vehicle. The system comprises: a cargo space floor (22); an inner floor (21) arranged on the cargo space floor (22), wherein the inner floor (21) is provided with at least one through-hole (26); for each through-hole (26), a fastening device (30) comprising an anchoring portion (31) fixedly connected to a shaft (35); wherein the anchoring portion (31) of each fastening device (30) is adhesively connected to the cargo space floor (22) and arranged such that the shaft (35) is arranged in the associated through-hole (26) with an extension perpendicular to the inner floor (21); and wherein the shaft (35) of each fastening device (30) is configured to be fixedly connected to said equipment (2).

## Description

### Technical field

The present invention relates to fastening systems for equipment in cargo spaces of vehicles and methods for fastening equipment using such systems.

### Background

It is common practise to provide vans with working equipment in the form of cupboards, tool holders, shelves etc. In most cases, such equipment is provided in a separate step after the vehicle is already manufactured and/or sold to the customer. The orginal floor is a type of cargo space floor which is fixedly arranged to the framework of a vehicle. the orginal floor may be uneven and irregular in surface structure, why it may be difficult to attach equipment thereto. For that reason it is appropriate to provide the vehicle with a inner floor on top of the orginal floor. Such inner floor may e.g. be made of wood or polymeric material.

It is also desirable that the equipment is fastened as rigidly as possible in order to avoid damage on the cargo space of the vehicle and those tools and material which are stored there.

The equipment may be attached directly or in connection to the original floor or the cargo space floor of the cargo space, but in known fastening arrangements such a fixation may often lead to boring or screwing through the vehicle floor. This is even further problematic for hybrid and electric vehicles, where the traction battery and other essential components are often located in the vehicle body under the floor. Thus, there is a need for improvement.

### Summary

To achieve at least one of the above objects and also other objects that will be evident from the following description, a system having the features defined in claim 1 is provided according to the present invention. Preferred embodiments will be evident from the dependent claims.

According to a first aspect of the present invention, a fastening system for equipment in a cargo space of a vehicle is provided, the system comprising: a cargo space floor; an inner floor arranged on the cargo space floor, wherein the inner floor is provided with at least one through-hole; for each through-hole, a fastening device comprising an anchoring portion fixedly connected to a shaft; wherein the anchoring portion of each fastening device is adhesively connected to the cargo space floor and arranged such that the shaft is arranged in the associated through-hole with an extension perpendicular to the inner floor and wherein the shaft of each fastening device is configured to be fixedly connected to said equipment.

By means of the fastening system, a reliable fastening having sufficient strength, without necessitating any boring or screwing into the cargo space floor is provided.

The shaft may e.g. be provided as a protruding screw element.

The cargo space floor is often corrugated and therefore comprises ridges and valleys. To this end, according to at least one exemplary embodiment, the anchoring portion may be substantially rectangular, wherein the ratio between the length and the width of the anchoring portion may be at least 2.

By providing rectangular anchoring portions, a large area of contact for attaching to flat surface portions of ridges and valleys of the corrugated vehicle floor may be provided. Hereby, a stronger adhesion between the attachment portions and the cargo space floor is achieved. Alternatively, the ratio between the length and the width of the attachment portion may be 2 - 3.

According to at least one exemplary embodiment, the anchoring portion of each fastening device may be adhesively connected to the cargo space floor by a glue-joint.

The glue-joint may e.g. have a thickness of 5 mm, or 4 mm, or 3 mm, or 2 mm, or 1 mm. The glue-joint may be provided by a flexible acrylic adhesive, a two-part acrylic structural adhesive or a polyuretan adhesive.

Having a relatively thin glue-joint is preferable when using a stronger, more expensive adhesive.

According to at least one exemplary embodiment, the anchoring portion may be provided with at least two protruding distancing elements arranged between the anchoring portion and the cargo space floor and in contact with the cargo space floor so as to define a maximum thickness of the glue-joint.

According to at least one exemplary embodiment, each through-hole is at least partially covered by a respective cover cap.

Hereby, the through-holes, and thereby the anchoring portion and the cargo space floor is protected from soiling.

That a cover cap at least partially cover a through-hole is to be understood as the cap cover a part of or the whole of the cross-sectional area of the through-hole as seen in the horizontal plane of extension of the inner floor.

Furthermore, according to at least one exemplary embodiment, each cover cap may be at least partially arranged around the shaft arranged in the associated through-hole so as to fix the position of the anchoring portion fixedly connected to said shaft in relation to the cargo space floor.

Hereby, the cap does not only serve the purpose of protecting the anchoring portion and the cargo space floor from soiling, but also stabilizing the fastening device. This is particularly important during curing of the adhesive.

The anchoring portions may have any shape other than rectangular. For example, the anchoring portions may be substantially oblong and irregular. Alternatively, the anchoring portions may be substantially triangular or circular.

According to at least one exemplary embodiment, each anchoring portion may have a shape complementary to the associated through-hole, and wherein each anchoring portion is arranged in the associated through-hole.

Hereby, there is no need for a further element to fix the position of the anchoring portion in relation to the cargo space floor or the inner floor, as has been described above in relation to the cover cap.

Preferably, any through-hole, and consequently any anchoring portion arranged therein, is substantially circular.

According to at least one exemplary embodiment, the anchoring portion of each fastening device is adhesively connected to the cargo space floor by a glue-joint, and wherein each anchoring portion is at least partially embedded in the associated glue-joint.

By at least partially embedding the anchoring portion in the associated glue-joint, a stronger adhesive connection is provided.

For such embodiments, the glue-joint may have a thickness of 0.5 cm, or 1 cm, or 1.5 cm, or 2 cm, or 2.5 cm, or 3 cm. Thus, having the anchoring portion arranged in the through-hole and at least partially embedded in the glue-joint often necessitates a thicker glue-joint than embodiments where the anchoring portion is not arranged in the through-hole, but closer to the cargo space floor. Therefore, it is preferable that a cheaper glue is used for these embodiments.

According to at least one exemplary embodiment, the shaft is provided with an angle bar fixedly fastened thereto by a fastening portion, wherein the angle bar is configured to be fixedly connected to the equipment.

For embodiments where the anchoring portion is not arranged in the through-hole, but closer to the cargo space floor, the position of the anchoring portion during curing is naturally more sensitive to distruption. Thus, it is preferable that the angle bar is fastened to the shaft by the fastening portion after the adhesive has cured. Advantageously, the required torque for tightening the fastening portion such that the angle bar is fixedly fastened to the shaft is applied after a curing time 8 hours, or 10 hours, or 12 hours.

For embodiments where the anchoring portion is arranged in the through-hole and, optionally, when the anchoring portion is at least partially embedded in the associated glue-joint, the angle bar is preferably fastened to the shaft by the fastening portion during curing of the adhesive. More preferably, the required torque for tightening the fastening portion such that the angle bar is fixedly fastened to the shaft is applied before arranging the anchoring portion in the through-hole. Hereby, the fastening device may be fixedly connected to the equipment before the adhesive is fully cured.

According to a second aspect of the present invention, a method for fastening equipment in a cargo space of a vehicle is provided, the method comprising: identifying at least one anchoring positions on an inner floor arranged on a cargo space floor; for each anchoring position, drilling a respective through-hole through the inner floor; for each through-hole, adhesively connecting an anchoring portion of a fastening device to the cargo space floor and arranging the fastening device such that a shaft fixedly connected to the anchoring portion is arranged in the through-hole with an extension perpendicular to the inner floor; and fixedly connecting said equipment to the shaft of each fastening device.

Hereby, a reliable method fastening providing sufficient strength, without necessitating any boring or screwing into the cargo space floor is provided.

Any benefit or technical effect of the first aspect is applicable to the second aspect, unless otherwise stated.

According to at least one exemplary embodiment, the method may further comprise: covering each through-hole at least partially by a respective cover cap; and fixing the position of the anchoring portion in relation to the cargo space floor by arranging each cover cap at least partially around the associated shaft fixedly connected to the anchoring portion .

According to at least one exemplary embodiment, each anchoring portion may be substantially circular with a shape complementary to the associated through-hole, wherein the step of adhesively connecting the anchoring portion may further comprise: applying adhesive to the cargo space floor; and arranging the anchoring portion in the through-hole and at least partially embedding the anchoring portion in the adhesive.

According to at least one exemplary embodiment, prior to arranging the anchoring portion in the through-hole, an angle bar may be fixedly fastened to the shaft by a fastening portion.

In other words, the angle bar may be fixedly fastened to the shaft by tightening the fastening portion by applying the adequate torque before arranging the anchoring portion in the through-hole. Thus, a pre-assembled fastening device and bracket assembly may be provided. Furthermore, this allows for the equipment to be fixedly attached to the fastening device prior to the glue-joint fully curing, which substantially saves installation time.

### Brief Description of the Drawings

The invention will in the following be described in more detail with reference to the enclosed drawings, wherein:
Fig. 1 shows a perspective sketch of working equipment in a cargo space in a vehicle,
Fig. 2a shows a perspective sketch of a fastening system according to the prior art,
Fig. 2b shows a cross-sectional view of the fastening system according to the prior art in Fig. 2a,
Fig. 3a shows a perspective sketch of one embodiment of the fastening system according to the present invention,
Fig. 3b shows a side view of one embodiment of the fastening device of the fastening system,
Fig. 3c shows a top view of the fastening device in Fig. 3b,
Fig. 3d shows a cross-sectional view of the section in Fig. 3a of one embodiment of the fastening system,
Fig. 4a shows an alternative embodiment of the fastening device,
Fig. 4b shows cross-sectional view of one embodiment of the system comprising fastening devices of Fig. 4a, and
Fig. 5 shows the steps of a fastening method of equipment in a cargo or back space in a vehicle by means of the fastening system according to the present invention.

### Description of Embodiments

The present invention will be described more fully hereinafter with reference to the accompanying drawings, in which preferred embodiments of the invention are shown. This invention may, however, be embodied in many different forms and should not be construed as limited to the embodiments set forth herein; rather, these embodiments are provided so that this disclosure will be thorough and complete, and will fully convey the scope of the invention to those skilled in the art. In the drawings, like numbers refer to like elements.

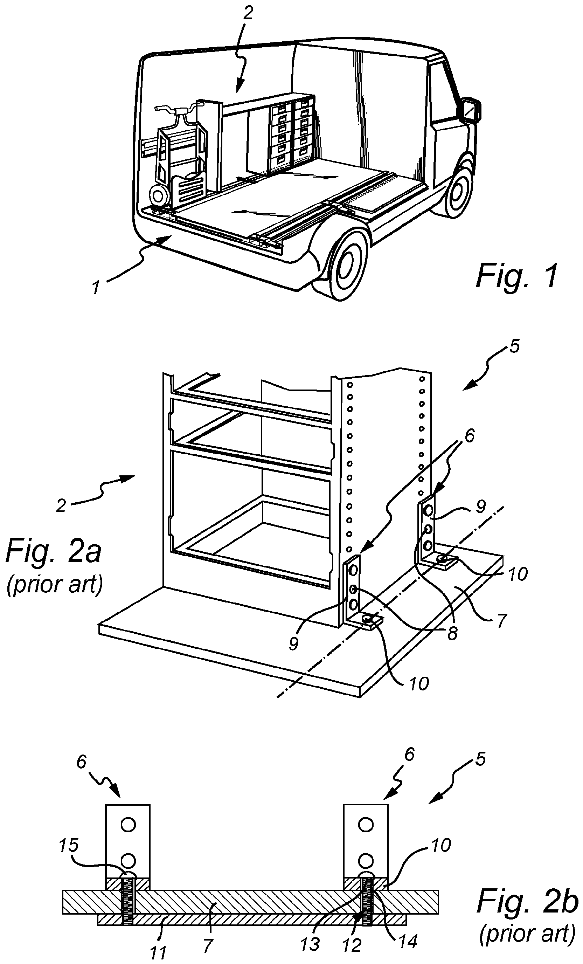

In Fig. 1 a cargo space 1 of a vehicle of a van type is shown. As is shown, equipment 2 may comprise shelves, open storage boxes and a chest of drawers.

In Fig. 2a, a fastening arrangement 5 for fastening equipment 2 according to prior art is shown. The fastening arrangement 5 comprises fixation elements 6 or angle bars used for fastening the working equipment 2 to an inner floor 7 of the cargo space 1 of the van. The angle bar 6 is provided with holes 8 by means of which it is fixedly fastened with a fixation portion 9 to the equipment 2. The angle bar 6 is further provided with an attachment portion 10 which is positioned in a substantially horizontal plane parallel with and onto the upper surface of the inner floor 7.

In Fig. 2b a cross sectional view of the fastening arrangement 5 according to prior art is shown. The inner floor 7 has been provided with holes 14, which are aligned with holes 12 of a bracket plate 11 located under the inner floor 7 and adapted to fit with the holes 13 in the attachment portion 10 of the angle bar 6. A screw element 14 fastens the angle bar 6 to the floor 7 by being screwed onto the threaded holes 13 of the underlying bracket plate 11.

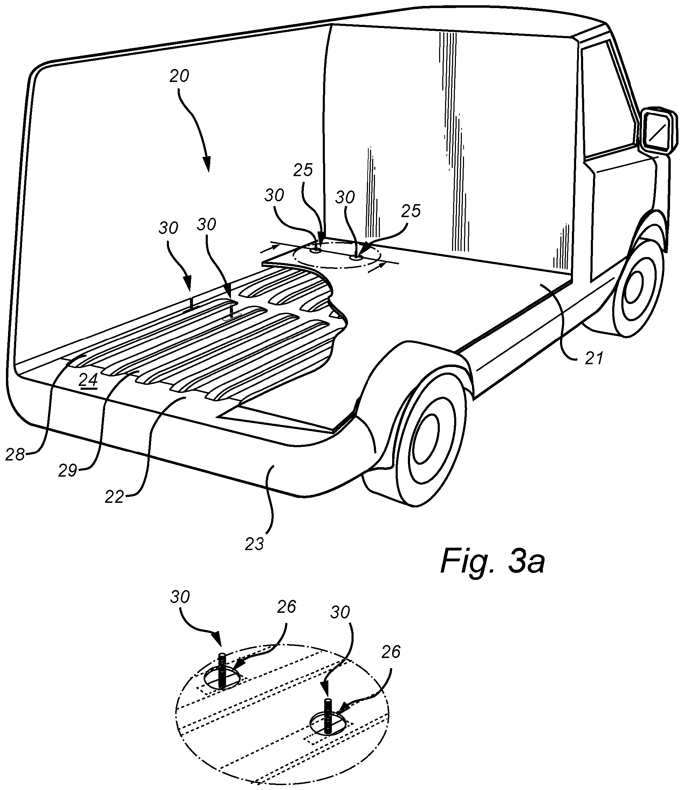

In Fig. 3a, a perspective view of a fastening system 20 according to one embodiment of the present invention is shown. The fastening system 20 comprises a cargo space floor 22, which is fixedly connected to the framework 23 of the vehicle. An inner floor 21 is arranged on an upper surface 24 of the cargo space floor 22. The inner floor 21 may be connected to the cargo space floor, e.g. by an adhesive. Alternatively, the inner floor 21 may be nailed, screwed or bolted to the cargo space floor 22 and/or a wall defining the cargo space 1. Alternatively, the inner floor 21 may just be held in place by the walls defining the cargo space 1.

The inner floor 21 is provided with through-holes 26. The through-holes 26 are preferably drilled by means of a tool, e.g. a circular saw. Preferably, the tool may be provided with a stop position so that no drilling or damage occurs into the underlying cargo space floor 22 or in another part of the framework 23 of the vehicle.

The through-holes 26 are provided at identified anchoring positions 25. The separate anchoring positions 25 may be identified by means of a gauge or a template used for indicating and marking at which positions the equipment 2 is to be installed, and thereby at which position the fastening portion 10 of the angle bars 6, are configured to be fixedly fastened.

The diameter of the through-hole 26 is preferably 40 mm to 100 mm. The diameter of the through-hole 26 is more preferably 60 mm to 80 mm.

For each through-hole 26, a fastening device 30 device is provided, wherein the fastening device 30 is adhesively connected to the cargo space floor beneath the anchoring position 25.

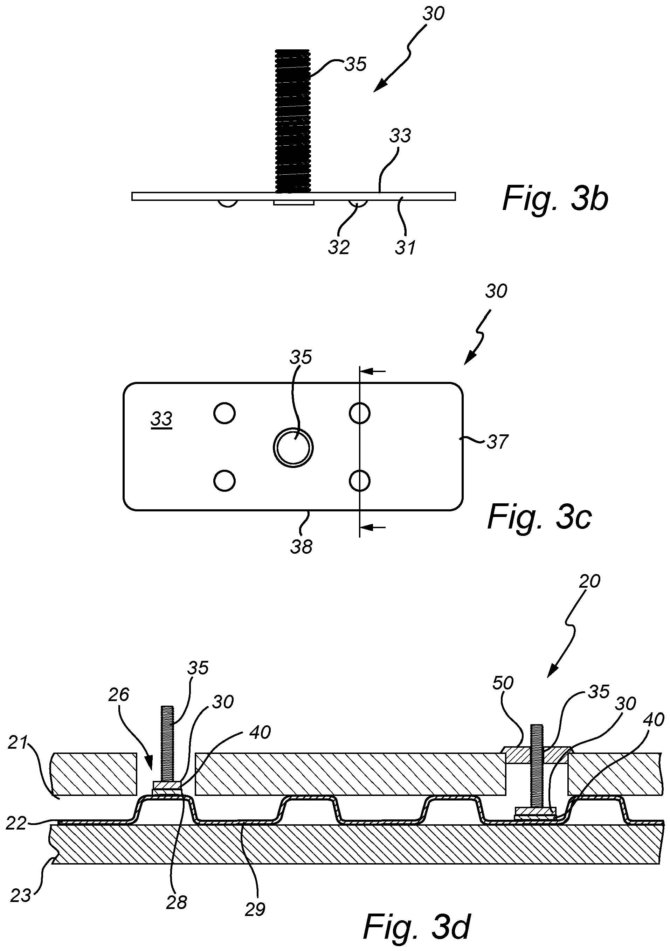

In Fig. 3b and 3c the fastening device 30 according to at least one exemplary embodiment is shown. The fastening device 30 comprises a shaft 35 into which the fastening portion 10 of the angle bar 6 is adapted to be fixedly connected to the working equipment 2. The shaft 35 is here provided on a top surface 33 of the fastening device 30. The shaft 35 is here provided as a protruding screw element. Preferably, the protruding screw element 35 is a stud element provided with male threads. Other screw elements and female threads may also be possible.

After installation of the equipment 2, the fixed attachment joint (not shown in the figures) between the shaft 35 and the fastening portion 10 of the angle bar 6 may be achieved by bolted joint, a screw-and-nut joint (not shown) or the like, which is not described further hereinafter.

The fastening device 30 is further provided with an anchoring portion 31 for adhesively fastening the fastening device 30 to the cargo space floor (22). The area of the anchoring portion 31 is preferably 1000 mm² to 4000 mm² for providing a sufficient strength of the cured glue joint configured to be provided thereon. The area of the anchoring portion 31 is more preferably 1500 mm² to 2500 mm². The area of the anchoring portion 31 is even more preferably 2000 mm² to 3000 mm². In one embodiment, the area is most preferably 2300 mm² to 2800 mm².

The surface 24 of the cargo space floor 22 is often provided with ridges 28 and grooves 29. For the fastening device 30 to fit such a floor 22, the anchoring portion 31 preferably has an oblong shape. The anchoring portion 31 may e.g. be substantially rectangular and there may be a ratio between the length 38 and the width of at least 2, and preferably 2 to 3.

The thickness of the anchoring portion 31 may vary depending on which material being used and in those cases steel above certain strength is used, the thickness may be reduced. The bracket anchoring portion 31 may also be manufactured of other material than steel and or metal alloys. Furthermore, these dimensions described shall not be considered as limiting for the invention. It is considered obvious that the manufacturing of the anchoring portions 31 over-dimensioned will lead to the desired effect, but the size of the anchoring portions 31 should be limited partly due to material costs, partly due to be adapted to the described ridges 28 and grooves 29 and but due to the through-holes 26 through which they are to be fitted. It is of course possible for the skilled person in the art to modify the design of the fastening devices 30 within the scope of the invention by for example providing the fastening device 30 with more than one anchoring portions 31 35.

The anchoring portion 31 is further provided with a number of protruding spacer means or distancing elements 32 for controlling the amount and thickness of the adhesive to be provided between the anchoring portion 31 and the cargo space floor 22. Hereby, a regular and even glue joint is obtained. In Fig. 3c, four distancing elements 32 are provided to the attachment portion 31. However, the distancing elements 32 may also be oblong and elongated, then it may be sufficient that the attachment portion 31 is provided with at least two distancing elements 32.

In Fig. 3d a cross-sectional view of one embodiment of the fastening system 20 is shown. The fastening device 30 is adhesively attached to the cargo space floor 22 by an adhesive in the form of a glue-joint and arranged such that the shaft 35 is arranged in the associated through-hole 26 with an extension perpendicular to the inner floor 21. Here, there are two fastening devices 30, wherein one fastening device 30 is arranged on a ridge 28 and one fastening device 30 is arranged in a groove 29.

The glue-joint 40 is provided by an elastic and high strength adhesive. Preferably, the adhesive is a flexible acrylic adhesive, e.g., a two-part acrylic structural adhesive or a polyurethan adhesive. The adhesive may for instance be "3M^{™} Scotch-Weld^{™} Flexible Acrylic Adhesive DP8610NS" or "Sikaflex-668 black DRAFT".

The applied amount of said adhesive provided between the anchoring portions 31 and the cargo space floor 22 may be approximately 10 - 50 ml for one fastening device 30. Preferably, the adhesive amount is 10 ml. In cases where the top vehicle surface 22 is not a completely horizontal and plane surface, e.g. somewhere in the slope between a ridge 28 and a groove 29, a larger amount of adhesive means may be applied, e.g. up to 50 ml.

The full curing time for the adhesive to set to a glue-joint is approximately 24 hours at an ambient temperature of 23 °C. After that, a tightening torque for fastening the fastening portion 10 to the fastening device 30 in a bolted joint, a screw-and-nut joint or the like may be applied.

Tests have indicated that if utilizing an adhesive as specified above, a tensile strength of the glue-joint of 4 to 10 MPa may be obtained. Furthermore, an elongation break of 100 - 1000 % may be provided Thus, for minimizing crack formation in the glue joint, a ductile adhesive is preferred. For instance, a glue joint 40 having the thickness of 2 mm may elongate to e.g. 10 mm before break with an elongation break of 500 %. Furthermore, the glue joint 40 may operate as a flexible joint or anti-vibration joint during use. After installation of the equipment 2 in a vehicle, fastening devices 30 fixedly provided into and accommodated in the through-holes 26 may at least partly be provided with a covering arrangement or a cover cap 50 for cover said fastening device 30 and the through-hole 26 of the inner floor 21, see Fig. 3d. In that way, dirt, dust and other particles are prevented to end up into the through-holes 26. The cover cap 50 may comprise a hole for the throughgoing/passing shaft 35. However, in some cases, the covering caps 50 completely cover the through-holes 25 for a future removal thereof, for instance for a following installation and fastening of the equipment 2.

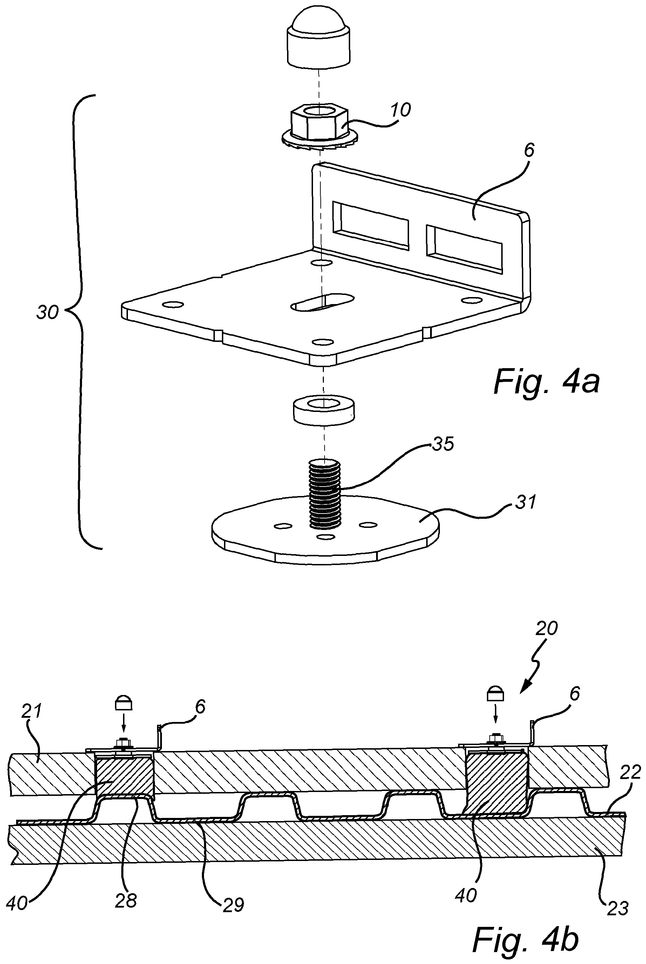

An alternative embodiment of the fastening device 30 is shown in Fig. 4a and 4b. Here, the anchoring portion 31 has a shape complementary to the associated through-hole 26. Furthermore, each anchoring portion 31 is arranged in the associated through-hole 26. Hereby, the position of the anchoring portion 31, and therefore the fastening device 30, is fixed in relation to the inner floor 21 and the cargo space floor 22. Thus, the angle bar 6 may be fixedly fastened to the shaft 35 by tightening the fastening portion 10 by applying the adequate torque before arranging the anchoring portion 31 in the through-hole 26. Thus, a pre-assembled fastening device and bracket assembly may be provided. Furthermore, this allows for the equipment 2 to be fixedly attached to the fastening device 30 prior to the glue-joint fully curing, which substantially saves installation time.

Any through-hole 26, and consequently any anchoring portion 31 arranged therein may e.g. be substantially circular or semicircular. Alternatively, any through-hole 26, and consequently any anchoring portion 31 arranged therein may have a shape of a truncated circle.

Furthermore, each anchoring portion 31 is adhesively connected to the cargo space floor 22 by a glue-joint 40. For these embodiments, the glue-joint may have a thickness of 0.5 cm, or 1 cm, or 1.5 cm, or 2 cm, or 2.5 cm, or 3 cm. However, as is apparent from Fig. 4b, glue-joints 40 may differ in thickness. In Fig. 4b, one glue-joint 40 is arranged on a ridge 20, whereas the other glue-joint 40 is arranged in a groove 29, and the two glue-joints 40 are therefore of different thickness.

Here, the glue-joints are in contact with a respective bottom side of the anchoring portions 31. Alternatively, each anchoring portion 31 may be at least partially embedded in the associated glue-joint 40. By at least partially embedding the anchoring portion 31 in the associated glue-joint, a stronger adhesive connection is provided.

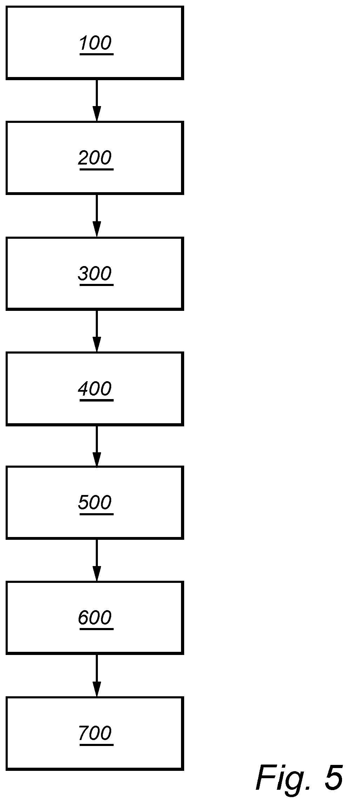

An exemplary method for fastening the equipment 2 in a cargo space in a vehicle utilizing a fastening system 20 is schematically illustrated in Fig. 5. The equipment 2 is to be positioned to their intended installation position. For identifying a preferred position of an anchoring position 25, a template or a gauge may be used.

Thus, the first step is identifying at least one anchoring position 25 on the inner floor 21. Thereafter, drilling 200, for each anchoring position 25, a through-hole 26, is performed through the inner floor 21. Thereafter, adhesively connecting 300 an anchoring portion 31 of the fastening device 20 to the cargo space floor 22 and arranging the fastening device 30 such that the shaft 35 fixedly connected to the anchoring portion 31 is arranged in the through-hole 26 with an extension perpendicular to the inner floor 21, and subsequently fixedly connecting 400 the equipment 2 to the shaft 35 of each fastening device. The method may also comprise the optional step of positioning 500 the fastening device 30 on a substantially horizontal surface portion of a ridge 28 or a groove 29 of the cargo space floor 21, and/or applying 600 tightening torque for fastening the fastening portion 10 to the fastening device 30 , and/or the optional step of covering 700 the at least one fastening device 30 with a covering means such as a cover cap 50.The number of fixation elements or angle bars 6, fastening portions 10, through-holes 26, corresponding anchoring positions 25 the fastening devices 30 to be utilized depend on the type and number of working equipment 2 to be installed in a vehicle.

In the drawings and specification, there have been disclosed preferred embodiments and examples of the invention and, although specific terms are employed, they are used in a generic and descriptive sense only and not for the purpose of limitation, the scope of the invention being set forth in the following claims.

## Claims

1. A fastening system (20) for equipment (2) in a cargo space of a vehicle, the system comprising:
a cargo space floor (22);
an inner floor (21) arranged on the cargo space floor (22), wherein the inner floor (21) is provided with at least one through-hole (26);
for each through-hole (26), a fastening device (30) comprising an anchoring portion (31) fixedly connected to a shaft (35); wherein
the anchoring portion (31) of each fastening device (30) is adhesively connected to the cargo space floor (22) and arranged such that the shaft (35) is arranged in the associated through-hole (26) with an extension perpendicular to the inner floor (21); and
wherein the shaft (35) of each fastening device (30) is configured to be fixedly connected to said equipment (2).

2. The system according to claim 1, wherein the anchoring portion (31) of each fastening device (30) is adhesively connected to the cargo space floor (22) by a glue-joint (40).

3. The system according to claim 2, wherein the glue-joint (40) has a thickness of 5 mm, or 4 mm, or 3 mm, or 2 mm, or 1 mm.

4. The system according to any preceding claim, wherein the anchoring portion (31) is substantially rectangular, and wherein the ratio between the length (38) and the width (37) of the anchoring portion (31) is at least 2.

5. The system according to claim 4, wherein the anchoring portion (31) is provided with at least two protruding distancing elements (32) arranged between said anchoring portion (31) and the cargo space floor (22) and in contact with said cargo space floor (22) so as to define a maximum thickness of the glue-joint (40).

6. The system according to any preceding claim, wherein each through-hole (26) is at least partially covered by a respective cover cap (50).

7. The system according to claim 7, wherein each cover cap (50) is at least partially arranged around the shaft (35) arranged in the associated through-hole (26) so as to fix the position of the anchoring portion (31) fixedly connected to said shaft (35) in relation to the the cargo space floor (22).

8. The system according to claim 1, wherein each anchoring portion (31) has a shape complementary to the associated through-hole (26), and wherein each anchoring portion (31) is arranged in said associated through-hole (26).

9. The system according to claim 8, wherein the anchoring portion (31) of each fastening device (30) is adhesively connected to the cargo space floor (22) by a glue-joint (40), and wherein each anchoring portion (31) is at least partially embedded in the associated glue-joint (40).

10. The system according to any one of claims 3 to 8 and 9, wherein the glue-joint (40) is provided by a flexible acrylic adhesive, a two-part acrylic structural adhesive or a polyuretan adhesive.

11. The system according to any preceding claim, wherein the shaft (35) is provided with an angle bar (6) fixedly fastened thereto by a fastening portion (10), wherein the angle bar is configured to be fixedly connected to said equipment (2).

12. Method for fastening equipment (2) in a cargo space of a vehicle, the method comprising:
- identifying (100) at least one anchoring positions (25) on an inner floor (21) arranged on a cargo space floor (22);
- for each anchoring position (25), drilling (200) a respective through-hole (26) through the inner floor (21);
- for each through-hole (26), adhesively connecting an anchoring portion (31) of a fastening device (30) to the cargo space floor (22) and arranging said fastening device (30) such that a shaft (35) fixedly connected to the anchoring portion (31) is arranged in the through-hole (26) with an extension perpendicular to the inner floor (21); and
- fixedly connecting said equipment (2) to the shaft (35) of each fastening device (30).

13. The method according to claim 12, further comprising:
- covering each through-hole (26) at least partially by a respective cover cap (50); and
- fixing the position of the anchoring portion (31) in a relation to the cargo space floor (22) by arranging each cover cap (50) at least partially around the associated shaft (35) fixedly connected to the anchoring portion (31).

14. The method according to claim 12, wherein each anchoring portion (31) has a shape complementary to the associated through-hole (26), wherein the step of adhesively connecting the anchoring portion (31) further comprises:
- applying adhesive to the cargo space floor (22); and
- arranging the anchoring portion (31) in the through-hole (26) and at least partially embedding the anchoring portion (31) in the adhesive.

15. The method according to claim 14, wherein, prior to arranging the anchoring portion (31) in the through-hole (26), an angle bar (6) is fixedly fastened to the shaft (35) by a fastening portion (10).
